# EUROPÄISCHE PATENTANMELDUNG

(11) **EP 0 922 382 A1**
(43) Veröffentlichungstag der Anmeldung: **16.06.1999**
(21) Anmeldenummer: 98123615.1
(22) Anmeldetag: 10.12.1998
(51) Int. Cl.: A01G 13/02, A01D 45/00

(54) **Spargelernte- und Dammpflegemaschine**

(30) Priorität: 12.12.1997 DE 19755231
(71) Anmelder: Kügel, Gottfried, 93326 Abensberg (DE)
(72) Erfinder: Kügel, Gottfried, 93326 Abensberg (DE)
(74) Vertreter: Graf, Helmut, Dipl.-Ing.

(57) **Zusammenfassung**

Eine selbstfahrende Spargelernte- und -dammpflegemaschine mit einstellbarem Sitz (19) weist eine unterhalb des Sitzes an den Damm anpaßbare Kammer (23) zur Aufnahme des beim Stechen des Spargels abgetragenen Erdreichs, eine abfördervorrichtung (32) dieses Erdreichs, einer Transportvorrichtung mit Taschen oder dgl. zum Hochfördern des Erdreichs vom Dammfluß zur Dammkrone, eine Kronenprofilformvorrichtung, eine Erdvorratskammer, die dem Profilformer zugeordnet ist, und eine Bandtransportvorrichtung (12) zum selbsttätigen Aufnehmen, Anheben und Führen der Abdeckfolile zum Abdecken des Dammes auf.

## Beschreibung

Die Erfindung betrifft eine Spargelernte- und Dampflegemaschine nach dem Oberbegriff des Anspruches 1.

Das Ernten von Spargel erfolgt in der Regel von Hand, indem eine Person am Spargeldamm entlang geht, den aus dem Boden spitzenden Spargel in gebückter Haltung von Hand freilegt und an einer tiefen Stelle abschneidet. Das durch das Freilegen des zu erntenden Spargels anfallende Erdreich rieselt dabei längs der Dammseite nach unten zum Dammfuß und muß anschließend wieder an der Dammkrone aufgefüllt werden, in der Regel durch einen gesonderten Arbeitsvorgang. Beide Vorgänge, das Ernten des Spargels wie auch das Pflegen des Dammes, sind auf diese Weise mühsam und mit erheblichem körperlichem Aufwand verbunden.

Im gewerblichen Spargelanbau wird der Spargeldamm heutzutage durch eine lichtundurchlässige Folie abgedeckt werden, die einerseits gute Wachstumsbedingungen für den Spargel liefert und andererseits den aus dem Boden spitzenden Spargel gegenüber Lichteinfall schützt, so daß auch dann, wenn die Spargelspitze bereits ein Stück aus der Dammkrone vorsteht, keine Verfärbung des aus dem Boden stehenden Spargels auftritt, die die Qualität mindern würde.

Um den geschilderten Arbeitsaufwand zu reduzieren, ist bereits eine maschinelle Vorrichtung vorgeschlagen worden, die entsprechend den Merkmalen des Oberbegriffs des Anspruches 1 ausgestattet ist. Eine derartige Maschine arbeitet zwar selbsttätig, so daß die auf der Maschine sitzende Person den Spargel ernten kann, und besitzt ferner eine Vorrichtung, um eine Folie während des Transports über die Maschine hinweg anzuheben und zu transportieren sowie wieder auf dem Damm abzulegen. Sie weist jedoch keine Möglichkeit auf, das beim Spargelstechen gelöste Erdreich des Dammes unmittelbar wieder auf den Damm aufzubringen, und besitzt auch keine Vorkehrungen, um die Abdeckplane bzw. Abdeckfolie selbsttätig aufzunehmen und exakt zu führen. Des weiteren hat die bekannte Maschine verhältnismäßig große Längenabmessungen und ist nicht teilbar. Eine derartige Maschine hat ferner den Nachteil, daß die Bedienungsperson, die die Maschine fährt, zum Kurvenfahren absteigen und die Maschine von Hand lenken muß, so daß eine Selbststeuerung vom Fahrersitz aus nicht vorgenommen werden kann. Desweiteren ist das Abdecken der Dammkrone mittels Plane oder Folie bei dieser Maschine sehr umständlich gelöst, da die Maschine zunächst unter die Plane fährt und die Plane hochgehoben wird, dann die Plane am Ausgangspunkt von Hand beschwert werden muß, und erst dann die Maschine weiterfahren kann. Unter anderem ist bei dieser Maschine auch nachteilig, daß die Ausbildung des Sitzes, den die Bedienungsperson einnimmt, nur eine reine Sitzhaltung der Bedienungsperson ermöglicht, was in Hinblich darauf, daß die Bedienungsperson ungünstig zur Dammkrone und zur eigentlichen Arbeitsstelle, an der der Spargel gestochen wird, sitzt, sehr anstrengend und nicht ergonomisch ist.

Aufgabe der Erfindung ist es deshalb, eine gattungsgemäße Maschine so weiterzubilden, daß mit ihr eine selbsttätige Damm pflege betrieben werden kann, und daß die Abdeckfolie bzw. Abdeckplane selbsttätig aufgenommen und exakt positioniert über die Maschine hinweg oder durch die Maschine hindurch, oder seitlich um die Maschine herum geführt und hinter der Maschine auf den Damm abgelegt werden kann. Des weiteren soll die Handhabung und Bedienung der erfindungsgemäßen Maschine besonders einfach durchführbar sein.

Gemäß der Erfindung wird dies mit den Merkmalen des Kennzeichens des Anspruches 1 erreicht. Weitere Ausgestaltungen der Erfindung sind Gegenstand der Unteransprüche.

Die Maschine nach der Erfindung weist einen Rahmen auf, der so in einzelne Abschnitte zerlegbar ausgebildet ist, daß zumindest der hintere und der vordere Abschnitt und z.B. die den vorderen und den hinteren Abschnitt miteinander verbindenden seitlichen Rahmenabschnitte auf einfache Weise voneinander gelöst und wieder zusammengesetzt werden können. Dies hat den entscheidenden Vorteil, daß zum Verstauen der Maschine ein wesentlich geringerer Platzbedarf erforderlich ist als bei einer Maschine mit starrem Rahmen, und daß des weiteren die Reparatur derartiger Maschinen durch Verwendung von Einzelkomponenten erheblich vereinfacht wird.

An einem Seitenrahmenabschnitt der Maschine ist ein Sitz für die Bedienungsperson angebracht, der zweckmäßigerweise in der Längs- und Querachse der Maschine, und insbesondere auch in der Höhe verschiebbar bzw. einstellbar ist. Zweckmäßigerweise kann der Sitz auch drehbar ausgebildet sein. Der Sitz ist am Rahmen in der Neigung verstellbar befestigt und weist in seiner unmittelbaren Nähe am Mittelrahmenabschnitt angeordnet die Steuerelemente auf, die für den Betrieb des Fahrzeugantriebs und für die Steuerung erforderlich sind. Die Räder des Fahrzeuges sind als Lenkräder ausgebildet, und an Rädern sind Steuer- bzw. Führungsräder zugeordnet, die mit der Lenkvorrichtung befestigt sind. Die Steuerungs- und Führungsräder liegen an den Seitenwandungen des Dammes links und rechts an und tasten somit die Position des Fahrzeuges relativ zum Damm ab, um eine Geradeausfahrt sicherzustellen.

Eine Auslenkung der Führungsräder bzw. ein zunehmender Druck auf die Führungsräder führt dazu, daß die Räder dem Damm angepaßt entsprechend selbsttätig nachgestellt werden, so daß das Fahrzeug, das von der Ideallinie abweicht, wieder in die Ideallinie (in Längsrichtung des Dammes) zurückgeführt wird. Dem Sitz sind zwei gepolsterte Stützelemente zugeordnet, die zur Aufnahme der Knie der sich auf dem Sitz abstützenden Person dienen. Die Bedienungsperson nimmt somit eine kombinierte sitzende und knieende Position ein, die vom ergonomischen Standpunkt aus besonders empfehlenswert ist. Die Füsse stützen sich auf einer am Maschinenrahmen oder am Sitz befestigten Trittfläche ab, die höhenbeweglich angeordnet ist und auslenken kann, wenn ein Hindernis auf der Sohle zwischen zwei Dämmen auftritt.

In dieser kombinierten Sitz-Knie-Position hat die Bedienungsperson eine besonders günstige Stellung zum Schneiden des Spargels. Um den Spargel einfach und sicher ablegen zu können, ist auf der gegenüberliegenden Rahmenseite ein auswechselbarer Korb angeordnet, in den der geschnittene Spargel abgelegt wird. Damit ist die Bedienungsperson in der Lage, den abgeschnittenen Spargel ohne mühsame Körperbewegung oder -drehung in einen Behälter oder in eine Abgabevorrichtung abzugeben. In weiterer Ausgestaltung der Erfindung wird vorgeschlagen, das Putzen, Sortieren und Ablegen des gestochenen Spargels auf selbsttätige Weise vorzunehmen, wobei die Spargelstangen jeweils zum Putzen zwischen Rollen aufgenommen werden, zum Sortieren eine Längen- und Dickenmeßvorrichtung vorgesehen, und das Ablegen optisch gesteuert wird. Damit der Spargel nach dem Ablegen nicht nachdunkelt, werden Körbe verwendet, die eine Zudecke aufweisen.

Am Seitenrahmenabschnitt ist, beispielsweise unterhalb des Sitzes, eine Erdaufnahmekammer angeordnet, deren Vorderwand der Neigung der Dammseite entsprechend ausgebildet und an der Vorderseite offen ist, so daß das Erdreich, das beim Ausgraben des Spargels vom Damm gelöst wird, nach abwärts rieseln kann und in der Kammer aufgenommen wird. Die Vorderfläche (in bezug auf die Fahrtrichtung) ist zum Damm hin geschlossen, die gegenüberliegende hintere Fläche ist teilweise offen, und zwar in einem Spalt parallel zur Dammneigung, so daß das in der Kammer aufgenommene Erdreich dosiert stehen bleibt, wenn die Maschine sich in Vorwärtsrichtung bewegt. Das auf diese Weise aus der Erdaufnahmekammer austretende Erdreich wird von einer nachfolgenden Fördervorrichtung, die mit dem Maschinenrahmen befestigt ist, aufgenommen, hochgefördert und zur Ausbildung der Dammkrone verwendet.

Die Fördervorrichtung besteht aus einem Förderband, das in einer schrägen Ebene umläuft, die der Schräge der Dammneigung entspricht, und das auf seiner Bandfläche Taschen, Schaufeln oder dergl. Elemente aufweist, die aus der Erdaufnahmekammer stammendes Erdreich aufnimmt, hochfördert und auf die Dammkrone ablegt. Anstelle einer derartigen bandförmigen Fördervorrichtung kann auch eine Förderschnecke verwendet werden. Die Dammkrone wird daduch profiliert, daß am Rahmen eine Schablone befestigt ist, die das Profil der Dammkrone besitzt, so daß bei sich bewegender Maschine die Schablone der Dammkrone zugeordnet wird und in sie eingreift, wodurch das Dammkronenprofil, z.B. ein M-, V-, U-oder dergl. Profil, erzeugt wird. Das von der Fördervorrichtung auf die Dammkrone hochgeförderte Erdreich, das durch die Schablone nivelliert und abgestreift wird, kann dabei die Dammseitenwände nach abwärts rieseln und wird beim nächsten Durchlauf aufgenommen. Dieser Teil des Erdreichs wird durch die Fördervorrichtung hoch und in die Erdvorratskammer gefördert, von der aus das Erdreich zum Schließen des beim Ernten der Spargelstange entstandene Loch wieder aufgefüllt wird.

Die Folienüberführungsvorrichtung besteht aus einem auf dem Maschinenrahmen befestigten Gestänge mit Transportrollenpaaren, zwischen denen die feststehende Folie bei sich bewegender Maschine transportiert wird, einem kontinuierlichen, sich über die gesamte Maschine erstreckenden Förderband, das den Transport der Folie (bzw. Plane) bewirkt, und einer an der Maschinenvorderseite ausgebildeten Folienaufnahmevorrichtung, die z.B. ein gabelförmiges Element ist. Die Element wird aufnahmeseitig lediglich aufgelegt und anschließend selbsttätig über die Maschine geführt und am rückseitigen Ende der Maschine auf den Damm selbsttätig abgelegt, so daß der Fahrer der Maschine während des gesamten Arbeitsvorganges sich voll auf die Vorgänge des Erntens und Dammpflegens konzentrieren kann und die Folienhandhabung selbsttätig abläuft.

Die Förderrichtung der Folie kann reversierbar ausgeführt sein. Die Bandgeschwindigkeit ist der Fahrgeschwindigkeit angepaßt, und die Folie wird druck- und zugschonend, d.h. entlastet, transportiert; sie hängt während des Arbeitsvorganges zur linken und rechten Seite nach abwärts, und zwar soweit, daß der Fahrer, der auf dem Sitz Platz nimmt, ungehindert Zugang zum Spargeldamm hat.

Wenn Abdeckfolien verwendet werden sollen, die auf einer Seite dunkel bzw. schwarz und auf der anderen Seite hell sind (die schwarze Seite oben bei geringer Sonneneinstrahlung, die helle Seite oben bei starker Sonneneinstrahlung), wird im Zuge der Folienüberführung eine Wendevorrichtung vorgesehen, die eine mechanische Umlegung der Folie um 180° bewirkt, derart, daß die dunkle und die helle Seite miteinander vertauscht werden. Diese Vorrichtung ist z.B. in Form eines in Bewegungsrichtung offenen und gekrümmten Blechteiles ausgebildet, das teilröhrenförmig ausgeführt sein kann und die Folie horizontal aufnimmt sowie wendelförmig einseitig an- und hochhebt sowie umschlägt, wodurch die kontinuierliche Folie in sich überkreuzt und um 180° gewendet wird. Es kann hierfür jedoch auch jede andere Art von Wendevorrichtung, mit der ein zwangsweises Umlegen bzw. Überkreuzen um 180° erzielt wird, eingesetzt werden. Die Wendevorrichtung kann dabei am vorderen oder am hinteren Ende der Maschine, oder auch im mittleren Abschnitt angeordnet sein. Für die Aufnahme der Folie und das Einführen in die Folienüberführungsvorrichtung wird beispielsweise ein gabelförmiges Element verwendet.

Nachstehend wird die Erfindung in Verbindung mit der Zeichnung anhand eines Ausführungsbeispieles erläutert. Es zeigt:
- Fig. 1: eine schematische Darstellung des Maschinenrahmens in Aufsicht,
- Fig. 2: eine Seitenansicht des Maschinenrahmens in schematischer Darstellung,

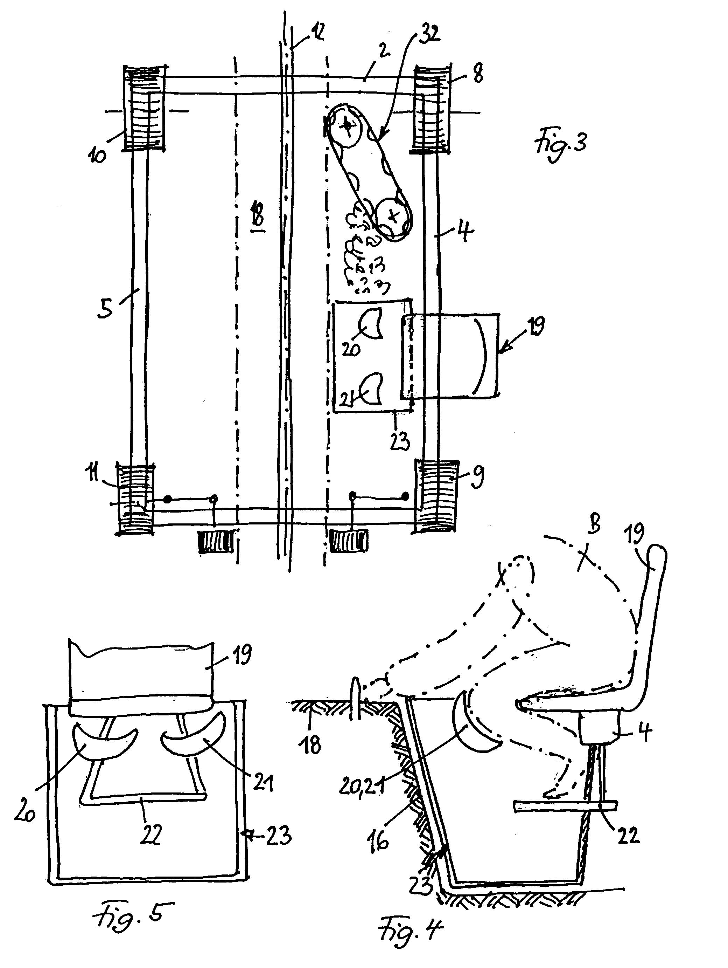

- Fig. 3: eine Aufsicht auf die Maschine nach der Erfindung in schematischer Darstellung,
- Fig. 4: eine Seitenansicht der Sitzanordnung mit Erdvorratskammer in schematischer Anordnung,

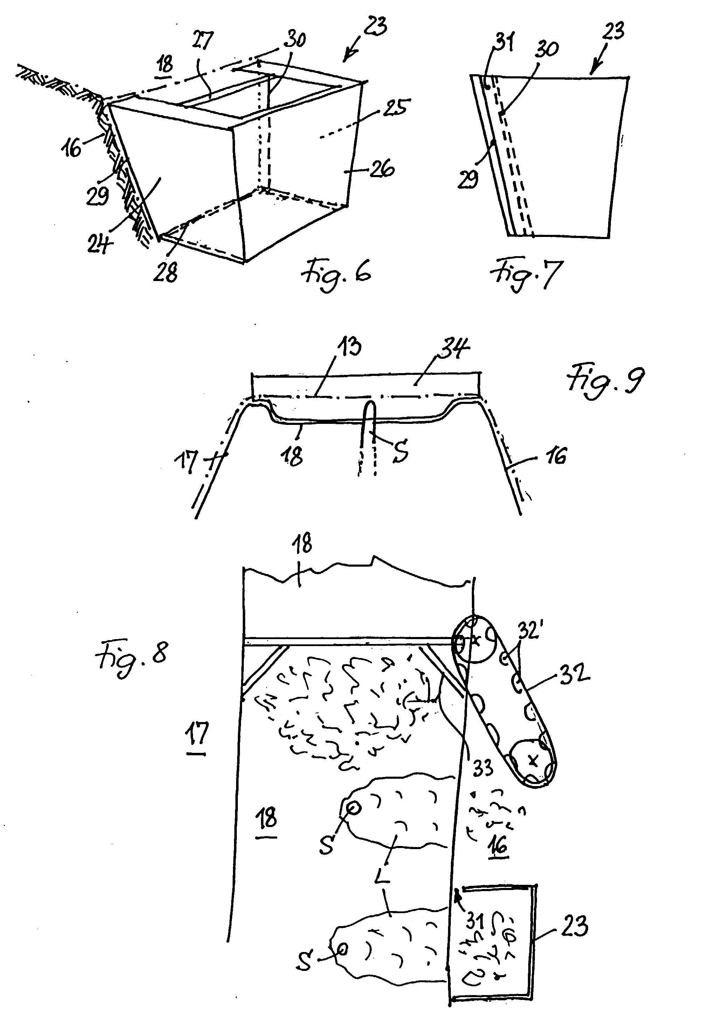

- Fig. 5: eine Frontansicht der Darstellung nach Fig. 4,
- Fig. 6: eine perspektivische Ansicht der Erdaufnahmekammer,

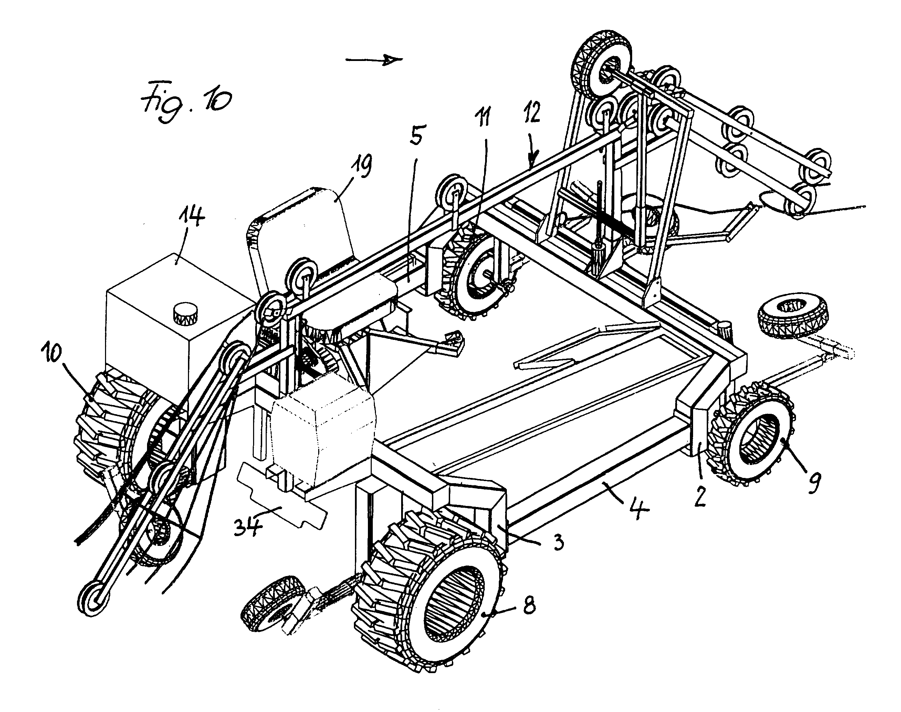

- Fig. 7: eine Seitenansicht der Erdaufnahmekammer,
- Fig. 8: eine Aufsicht auf den Damm mit Erdvorratskammer und Abziehschablone,

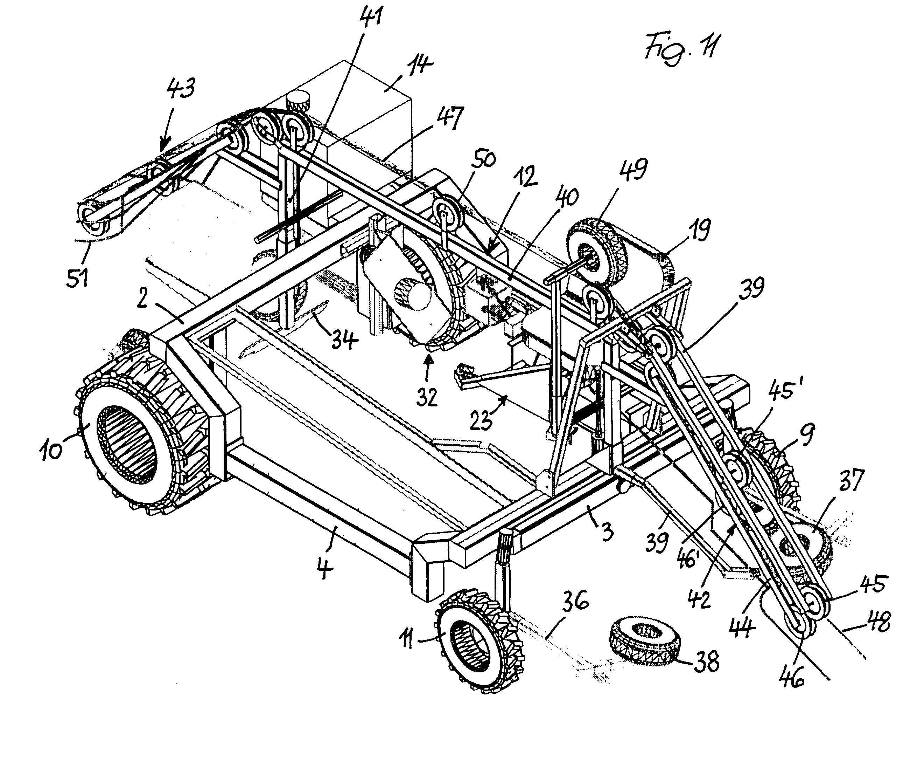

- Fig. 9: eine Frontansicht einer Abziehschablone an der Dammkrone,
- Fig. 10: eine Gesamtansicht einer erfindungsgemäßen Maschine in perspektivischer Darstellung, von hinten rechts
- Fig. 11: eine perspektivische Darstellung einer erfindungsgemäßen Maschine von vorne links,
- Fig. 12: einen Ausschnitt des vorderen Abschnittes der Darstellung nach Fig. 11 in vergrößertem Maßstab, und
- Fig. 13: eine Aufsicht auf die Maschine in der Darstellung nach Fig. 10.

Der Maschinenrahmen 1 besteht aus einem hinteren Rahmenteil 2, einem vorderen Rahmenteil 3 sowie Seitenrahmenteilen 4, 5. Die einzelnen Rahmenteile sind miteinander durch Steck- oder Schnellverriegelungsvorrichtungen 6, 7 lösbar verbunden und können auf einfache Weise getrennt werden, so daß ein Verstauen der Maschine mit geringem Platzbedarf möglich ist. Die Maschine ist auf vier Rädern 8, 9, 10, 11 fahrbar (es können wahlweise auch sechs oder mehr Räder vorgesehen werden). Die Räder sind als Lenkräder ausgebildet. Mit 12 ist ein Überkopfträger als Folienüberführungsvorrichtung angedeutet, der dazu dient, die Folie 13 (bzw. eine Plane), die zum Abdecken des Spargeldammes dient, beim Überfahren des Dammes anzuheben und wieder abzulegen. Für eine einwandfreie Führung wird die Abdeckfolie zwischen pendelnd angeordneten Lenkrollen oder Förderbändern aufgenommen, so daß die Folie durch diese Lenkrollen bzw. durch ein oberes und unteres Band hindurchgeführt und transportiert wird. Zur besseren Aufnahme der Folie wird ein Gegendruck auf die Folie ausgeübt. Mit 14 ist ein Fahrantrieb für die Maschine angedeutet. Dieser Fahrantrieb ist ein stufenloser Antrieb für eine Fahrgeschwindigkeit von 0 bis ca. 20 km/h. Dieser Antrieb dient gleichzeitig als Antrieb für die Folienüberführvorrichtung.

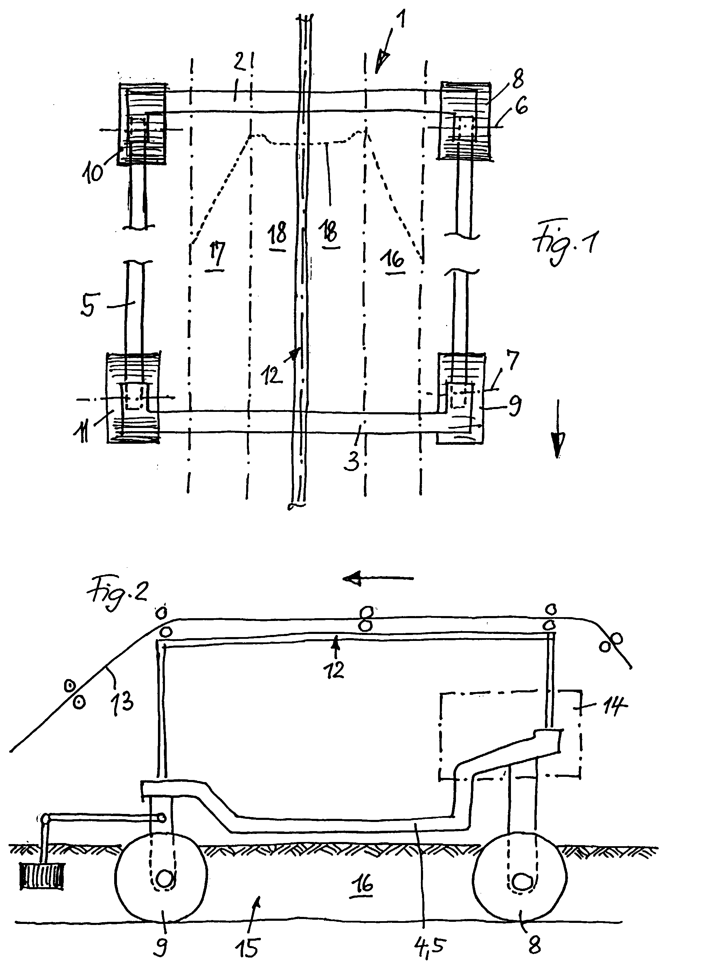

In Fig. 1 ist strichpunktiert der Damm 15 angedeutet, über den die Maschine verfahren wird. Die Dammseitenwände sind mit 16, 17, die Dammkrone ist mit 18 bezeichnet.

Auf dem Seitenrahmenabschnitt 4 ist ein Sitz 19 befestigt, dem Kniestützen 20, 21 und eine Fußstütze 22 zugeordnet sind, um der Bedienungsperson B ein weitgehend ermüdungsfreies Arbeiten zu ermöglichen. Der Sitz und/oder die Kniestützen und/oder die Fußstütze sind höhenverstellbar auf die jeweilige Körpergröße einstellbar. Der Sitz selbst ist ferner in und quer zur Fahrtrichtung am Maschinenrahmen 4 einstellbar. Am Seitenrahmen 4 ist zwischen Sitz 19 und Dammseitenwand 16 eine Erdaufnahmekammer 23 vorgesehen, die teilweise offen ist und aus zwei gegenüberliegenden, quer zur Längsachse verlaufenden Seitenwänden 24, 25 und einer Rückwand 26 sowie die Seitenwandungen 24 und 25 miteinander verbindenden Streben 27 und 28 besteht. Die der Dammseitenwand 16 zugewandte Kante 29 der Seitenwand 24 und die Kante 30 der Seitenwand 25 sind entsprechend der Neigung der Dammseitenwand 16 geneigt ausgebildet, wobei die Kante 30 der Seitenwand 24 parallel zur Kante 29, jedoch um einen Spalt 31 von der Dammseitenwand 16 zurückversetzt sind, damit das in der Kammer 23 beim Spargelstechen vom Damm gelöste Erdreich, das in die Kammer 23 rieselt, beim Verfahren der Maschine über den Damm in der Kammer angesammelt und aus der Kammer durch den Spalt 31 nach hinten abgegeben werden kann, wo dieses gelöste Erdreich von einer Erdfördervorrichtung 32 aufgenommen und zur Dammkrone 18 hochgefördert wird. Die Erdfördervorrichtung ist beispielsweise als umlaufendes Förderband ausgebildet, das Taschen 32', Schaufeln oder dgl. zur Aufnahme des Erdreiches aus der Erdaufnahmekammer 23 aufweist, oder ist als Förderschnecke ausgebildet. Das geförderte Erdreich wird in einen über der Dammkrone an der Maschine befestigten Erdvorratsbehälter 33 übergeben, der als Schieber wirkt, so daß in dem Bereich, in dem beim Spargelstechen am Damm Erdreich entfernt worden ist, die am Damm entstandenen Löcher L durch das Überfahren der Maschine und das Abgeben des Erdreiches aus dem Erdvorratsbehälter selbsttätig wieder aufgefüllt werden. Dem Erdvorratsbehälter 32 ist eine rahmenfeste Schablone 34 zugeordnet, die beim Verfahren der Maschine über die Dammkrone hinwegfährt und die Form der Schablone auf die Dammkrone überträgt, beispielsweise die Form eines U, eines V, eines M oder dgl., in jedem Fall eine profilierte Vertiefung in der Dammkrone, die einen Abstand der Dammoberseite zur abgelegten Abdeckfolie oder Abdeckplane ergibt, damit der Spargel S aus dem Boden ein gewisses Maß herauswachsen kann, ehe er an die Folie 13 anstößt.

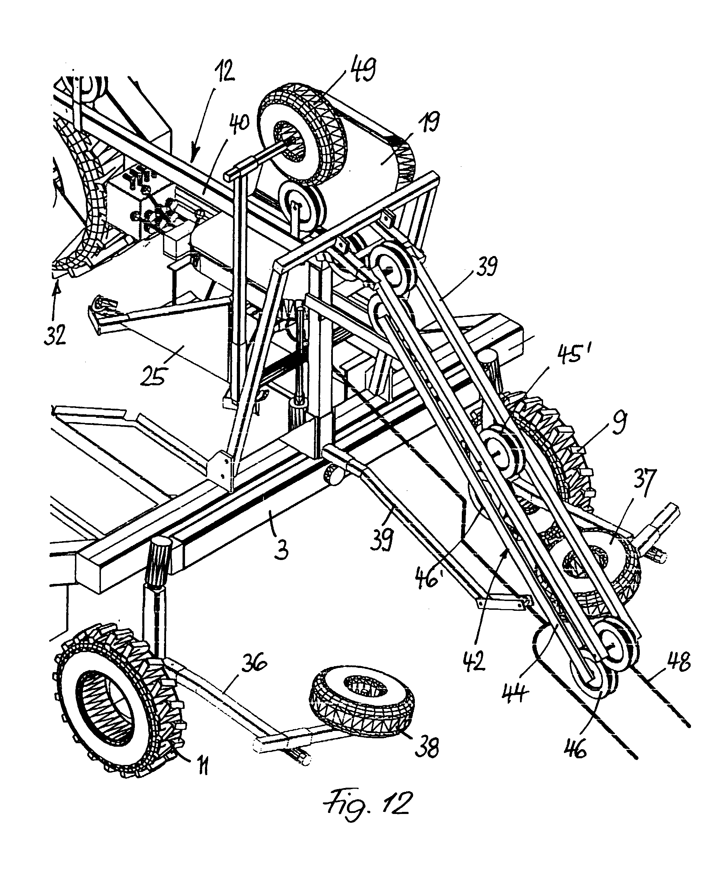

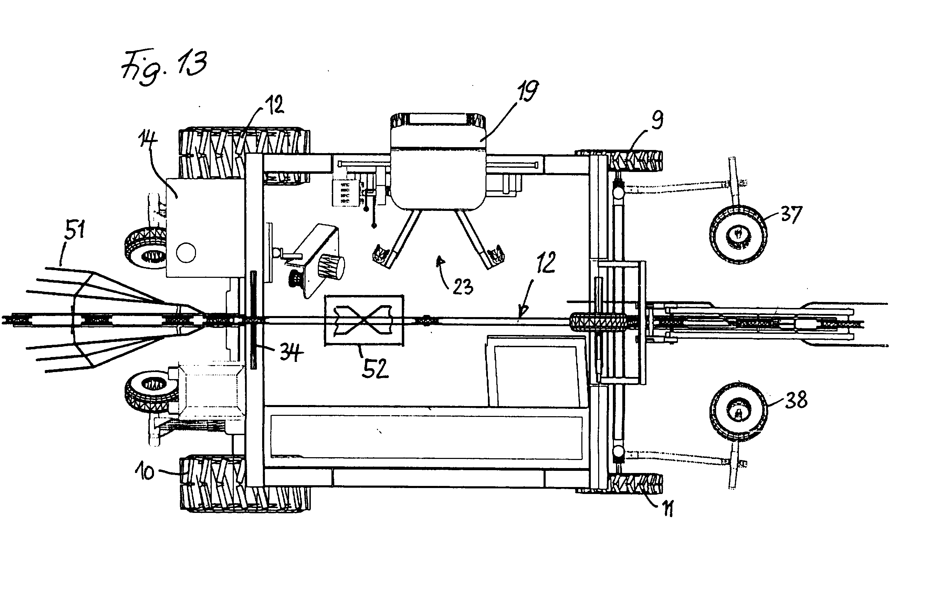

Die perspektivische Gesamtansicht einer Ausführungsformder erfindungsgemäßen Maschine nach den Figuren 10 - 13 zeigt den rechteckförmigen, zerlegbaren Maschinenrahmen 1 mit den Vorderrädern 9, 11, die als Lenkräder ausgebildet sind, und den Hinterrädern 10, 12. Die Vorderräder haben einen wesentlich kleineren Durchmesser als die Hinterräder.

An den Radaufnahmen der Vorderräder 9 und 11 sind Gelenkarme 35, 36 angelenkt, die Tasträder 37, 38 aufnehmen, welche an den beiden Seitenwänden 16, 17 des Dammes 15 anliegen und entsprechende Abweichungen von der Spurhaltung auf die Lenkräder 9 und 11 übertragen.

Die Folienüberführungsvorrichtung 12 besteht aus einem portalförmigen Träger 12, der aus einem vorderen vertikalen Abschnitt 39, einem horizontalen mittleren Abschnitt 40 und einem hinteren vertikalen Abschnitt 41 besteht, sowie einer vorderen Aufnahmevorrichtung 42 und einer hinteren Ablegevorrichtung 43 für das Anheben und Ablegen der Folie. Gestänge 44 nehmen Rollenpaare 45, 46; 45', 46',... auf, zwischen denen ein umlaufendes Transportband 47, das ggf. aus mehreren Abschnitten bestehen kann, geführt ist, das die Folie 13 zug- und druckentlastet anhebt, während die Maschine unter der Folie bewegt wird. Zur Aufnahme der Folie am vorderen Ende ist eine gabelartige Vorrichtung 48 vorgesehen, auf die die Folie aufgelegt wird bzw. die die Folie aufnimmt und zwischen das bodenseitige Rollenpaar 44, 45 einführt. Durch die Fahrbewegung der Maschine wird die stillstehende Folie 13 angehoben, und die Maschine fährt unter der Folie hindurch.

Im Verlauf der Folienführung sind ein oder mehrere von oben auf die Folie bzw. das Transportband 47 wirkende Andrück- und Antriebsrollen 49, sowie Stützrollen 50 vorgesehen, die am Rahmen befestigt sind. Am ausgangsseitigen Ende 43 wird die Folie 47 in entsprechender Weise wie am aufnahmeseitigen Ende 42 über Rollenpaare und eine fächer- oder gabelförmige Vorrichtung 51 geführt und auf den Damm aufgelegt. Mit 42 ist eine in den Zug der Folienüberführungsvorrichtung 12 eingeschaltete Folienwendevorrichtung schematisch dargestellt, die die Abdeckfolie 13 so wendet, daß die Unterseite nach oben gebracht wird, und umgekehrt.

### Bezugszeichenliste

- 1: Maschiennrahmen
- 2: hinterer Rahmenteil
- 3: vorderer Rahmenteil
- 4, 5: Seitenrahmenteile
- 6, 7: Schnellverriegelung
- 8 - 11: Räder
- 12: Ü berkopfträger bzw. Folienüberführungsvorrichtung
- 13: Folie bzw. Plane
- 14: Fahrantrieb
- 15: Damm
- 16, 17: Dammseitenwände
- 18: Damm krone
- 19: Sitz
- 20, 21: Kniestützen
- 22: Fußstütze B Bedienperson, Fahrer
- 23: Erdaufnahmekammer
- 24, 25: Seitenwände
- 26: Rückwand
- 27, 28: Streben
- 29: Kante der Seitenwand 25
- 30: Kante der Seitenwand 24
- 31: Spalt
- 32: Erdfördervorrichtung
- 32': Taschen
- 33: Erdvorratsbehälter
- 34: Schablone
- 35, 36: Gelenkarme der Vorderräder
- 37, 38: Tasträder
- 39, 40, 41: Abschnitte des portalförmigen Trägers
- 42: Aufnahmevorrichtung
- 43: Abgabevorrichtung
- 44: Gestänge
- 45, 46; 45', 46': Rollenpaare
- 47: Förderband
- 48: Aufnahmegabel
- 49: Andrückrollen
- 50: Stützrollen
- 51: Ablagefächer oder -gabel
- 52: Folienwendevorrichtung

## Patentansprüche

1. Selbstfahrende Spargelernte- und Dammpflegemaschine, mit einem rechteckförmigen Rahmen (1) mit Räder- oder Kettenantrieb (14), einem dem Damm (15) zugewandten, auf dem Rahmen befestigten Sitz (19), einer Vorrichtung (12) zum Auflegen einer Abdeckfolie (13) auf den Damm (15) und Führungsrädern, die an den Seitenwänden des Dammes laufend in Eingriff stehen und die Fahrtrichtung der Maschine vorgeben,
**dadurch gekennzeichnet,** daß
a) der Rahmen (1) einen in der x-, y- und/oder z-Richtung einstellbaren, dem Damm in Arbeitsposition zugewandten Sitz (19), wobei der Sitz insbesondere zwei der Körperform variabel anpaßbare Stützen für die Aufnahme der Knie der den Sitz einnehmenden Person aufweist,
b) unterhalb des Sitzes (19) eine an den Damm variabel anpaßbare Erdaufnahmekammer (23) für die dem Sitz (19) zugewandte Dammseite vorgesehen ist, die die durch das Stechen des Spargels abgetragene Erde aufnimmt und zur weiteren Nutzung an eine Abfördervorrichtung (32) übergibt,
c) die Abfördervorrichtung (32) die abgetragene Erde mit Hilfe eines Taschen oder Schaufeln aufweisenden Transportriemens, einer Förderschnecke oder dgl. Fördervorrichtung vom Dammfuß zur Dammkrone hochfördert,
d) eine Kronenprofilformvorrichtung (34), die die an der Dammkrone (18) hochgeförderte Erde auf der Dammkrone mit Hilfe einer Abziehschablone (34) in das gewünschte Profil (M-, V- oder U-Form) bringt,
e) eine Erdvorratskammer (33), die dem Profilformer zugeordnet ist, und die die beim Spargelstechen auftretenden Löcher auffüllt, und
f) eine Bandtransportvorrichtung (32) zum selbsttätigen Aufnehmen, Anheben und Führen der Abdeckfolie (13) zwischen Lenkführungs- oder -richtrollen für das Abdecken des Dammes vorgesehen ist.

2. Maschine nach Anspruch 1, dadurch gekennzeichnet, daß der Rahmen (1) in Komponenten bauweise zwei oder mehrteilig ausgebildet ist, z.B. aus einem vorderen, einem mittleren und einem hinteren Abschnitt (3, 4, 5, 2) besteht, und daß alle Abschnitte voneinander lösbar und damit in platzsparender Weise verstaubar sind, und daß die einzelnen Abschnitte zum Zerlegen der Maschine mittels Bolzen und Verriegelung, Steckvorrichtung, Scharniersystem oder dgl. miteinander verbunden und gesichert sind.

3. Maschine nach Anspruch 1 oder 2, dadurch gekennzeichnet, daß der der Sitzanordnung (19) gegenüberliegende mittlere Rahmenabschnitt (4, 5) zur Aufnahme von Körben für den geschnittenen Spargel ausgebildet ist, und daß eine maschinelle Vorrichtung zum Reinigen, automatischen Ablegen und Einzelsortieren des geschnittenen Spargels, die auf dem Rahmen (1) befestigt ist.

4. Maschine nach Anspruch 1, dadurch gekennzeichnet, daß die Erdaufnahmekammer (23) der in Fahrtrichtung vorderen Seite dem Dammprofil (15) angepaßt ist und auf der gegenüberliegenden Seite eine Begrenzungsfläche mit seitlicher, parallel zum Dammprofil im Abstand angeordneten Öffnung versehen ist, durch die die freigelegte Erde bei fahrender Maschine die Kammer dosiert verlassen kann und von der Erdfördervorrichtung (32) aufgenommen wird.

5. Maschine nach Anspruch 4, dadurch gekennzeichnet, daß die Erdfördervorrichtung (32) vom Dammfuß über die Dammkrone (18) hinaus verlaufend ausgebildet und so angeordnet ist, daß die aus der Erdaufnahmekammer (23) abgegebene Erde von den Taschen, Schaufeln, Schnecke oder dgl. Elementen, die die Arbeitsfläche des Förderbandes bilden, aufgenommen, in der Ebene des Dammprofiles hochtransportiert und im oberen Abschnitt auf die Damm krone über die Erdvorratsbehälter (33) abgegeben sowie durch eine einstellbare Schablone (34) profiliert wird.

6. Maschine nach Anspruch 5, dadurch gekennzeichnet, daß die Kopfprofilvorrichtung eine einstellbare Räumplatte oder Schablone (34) aufweist, die das Profil der Dammkrone (18) beim Überfahren des Dammes ausbildet, und daß für verschiedene Dammformen verschiedene Profile der Räumplatte vorgesehen sind.

7. Maschine nach Anspruch 1, dadurch gekennzeichnet, daß die Maschine mit Hilfe eines stufenlosen Fahrantriebes (14) angetrieben ist, daß die Steuerung für den Fahrantrieb variabel eingefügt am Sitz (19) oder in dessen Nähe am Rahmen (1) befestigt ist, und daß der Antriebsmotor (14) mit Getriebe oder Hydraulikantrieb am Rahmen (1) festgelegt ist.

8. Maschine nach Anspruch 1, dadurch gekennzeichnet, daß die Planen bzw. Folientransportvorrichtung (12, 13) wahlweise über Kopf über den Maschinenrah-men (1) hinweggeführt, unterhalb des Maschinenrahmens hindurchgeführt oder seitlich am Maschinenrahmen vorbeigeführt ist, daß die Folie (13) zwischen einem oberen und einem unteren Band bzw. einer Anordnung aus Rollen und Band geführt ist, und daß die Bänder bzw. Rollen kontinuierlich und endlos angetrieben angeordnet sind.

9. Maschine nach Anspruch 8, dadurch gekennzeichnet, daß die Folie (13) im Sichtbereich der Arbeitsstelle bzw. des Sitzes durch Stabführung kurvenförmig ausgelenkt wird, und daß ein Hebelgestänge zum selbsttätigen Anheben der Folie zur besseren Aufnahme der Folie vorgesehen ist.

10. Maschine nach Anspruch 8, dadurch gekennzeichnet, daß pendelnd aufgehängte Lenkrollen zur Ausrichtung der Folie vorgesehen sind, und daß zum Ausgleich eines unsymmetrischen Laufes der Folie der überhängende Teil einen Druck auf eine Ausgleichsvorrichtung ausübt, die dem durch die Folie erzeugten Gegendruck entgegenwirkt und die die Folie in die Mittenstellung zurückführt.

11. Maschine nach Anspruch 1, dadurch gekennzeichnet, daß im vorderen Bereich der Maschine Lenk- und Tasträder über Streben direkt mit der Lenkvorrichtung verbunden sind, daß die Tasträder in Eingriff mit den beiden Seiten eines Dammes stehen, und daß die Auslenkungen der Tasträder auf die Lenkräder einwirken, so daß die Maschine in ihrer Positionierung zum Damm gehalten wird, und daß die Lenkräder sowohl in der Horizontalen als in der Vertikalen einstellbar sind und direkt auf die Räder angesteuert werden.

12. Maschine nach Anspruch 1 oder 8, dadurch gekennzeichnet, daß die Folientransportvorrichtung eine Folienwendevorrichtung (52) im vorderen, mittleren oder hinteren Abschnitt der Maschine aufweist, die die Folie über eine mechanische Führung so wendet, daß die Ebene der Folie um 180° gedreht wird und im Anschluß an den Wendevorgang die Unterseite der Folie die Oberseite ist.
